(19) Europäisches Patentamt
European Patent Office
Office européen des brevets

(11) EP 4 624 517 A1

(12) **EUROPEAN PATENT APPLICATION**
published in accordance with Art. 153(4) EPC

(43) Date of publication:
**01.10.2025 Bulletin 2025/40**

(21) Application number: **23894543.0**

(22) Date of filing: **20.11.2023**

(51) International Patent Classification (IPC):
***C08J 5/04*** *(2006.01)* ***B32B 27/04*** *(2006.01)*
***C08G 64/04*** *(2006.01)* ***C08K 7/06*** *(2006.01)*
***C08L 69/00*** *(2006.01)* ***C08L 71/02*** *(2006.01)*

(52) Cooperative Patent Classification (CPC):
**B32B 27/04; C08G 64/04; C08J 5/04; C08K 7/06; C08L 69/00; C08L 71/02**

(86) International application number:
**PCT/JP2023/041582**

(87) International publication number:
**WO 2024/111535 (30.05.2024 Gazette 2024/22)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **22.11.2022 JP 2022186392**

(71) Applicants:
- **MITSUBISHI GAS CHEMICAL COMPANY, INC.**
**Chiyoda-ku**
**Tokyo 100-8324 (JP)**
- **Arisawa Mfg. Co., Ltd.**
**Joetsu-shi, Niigata 943-8610 (JP)**

(72) Inventors:
- **INOUE Kensuke**
**Kamisu-shi, Ibaraki 314-0102 (JP)**
- **OHMORI Yuta**
**Kamisu-shi, Ibaraki 314-0102 (JP)**
- **TANAKA Hiroshi**
**Joetsu-shi, Niigata 943-8610 (JP)**

(74) Representative: **Hoffmann Eitle**
**Patent- und Rechtsanwälte PartmbB**
**Arabellastraße 30**
**81925 München (DE)**

(54) **POLYCARBONATE RESIN PREPREG AND LAMINATE CONTAINING SAME**

(57) According to the present invention, there can be provided a polycarbonate resin prepreg, comprising a polycarbonate resin (A) and a continuous carbon fiber reinforced material (B), wherein the prepreg comprises a polyalkylene glycol (C) in an amount of 1% to 30% by mass with respect to the mass of the polycarbonate resin (A). In the present invention, an aspect, in which the polycarbonate resin prepreg comprises the continuous carbon fiber reinforced material (B) in an amount of 20% to 80% by volume, and the polycarbonate resin (A) and the polyalkylene glycol (C) in a total amount of 80% to 20% by volume, is preferable.

EP 4 624 517 A1

## Description

Technical Field

The present invention relates to a polycarbonate resin prepreg preferably used in aircraft components, spacecraft components, automobile components, ship components, electronic equipment components, sports-related components, etc., and a laminate comprising the prepreg.

Background Art

Since carbon fibers, glass fibers, and aramid fibers have low specific gravity compared to metals, but have excellent elastic modulus and strength, composite materials prepared by combining these fibers with various matrix resins are used in many fields such as aircraft components, spacecraft components, automobile components, ship components, civil engineering construction materials, and sports goods. In particular, a carbon fiber reinforced resin (CFRP), a composite material prepared by combining carbon fibers with an epoxy resin or an unsaturated polyester resin, has been widely used.

The conventional carbon fiber reinforced resin comprising a thermosetting resin as a matrix has the disadvantage that it takes an enormous time for thermosetting, but in recent years, a carbon fiber reinforced thermoplastic resin (hereinafter also referred to as "CFRTP" at times) comprising a thermoplastic resin as a matrix is expected to be a composite material that can be molded in high cycles and is being developed.

A short fiber reinforced thermoplastic resin, which can be molded into complicated shapes, has already been put to practical use, but the short fiber reinforced thermoplastic resin is problematic in that since the fiber length of the reinforced fibers is short, the short fiber reinforced thermoplastic resin has a significantly low elastic modulus, compared to that of light metals. For this reason, a continuous fiber reinforced thermoplastic resin is strongly desired. In addition, when a laminate is formed using such a resin, the formed laminate is desired to be excellent in terms of adhesion.

In Patent Literature 1, a sheet consisting of a carbon fiber reinforced thermoplastic resin having high moldability (i.e., a large amount of thermal deformation in a low temperature environment) is obtained. However, there has still been room for improvement in adhesion.

Citation List

Patent Literature

Patent Literature 1: WO2018/216516

Summary of Invention

Technical Problem

It is an object of the present invention to provide a polycarbonate resin prepreg having good adhesion, and a laminate comprising the prepreg.

Solution to Problem

The present inventors have conducted intensive studies directed towards achieving the above-described object, and as a result, the present inventors have found that, upon formation of a prepreg comprising a polycarbonate resin and a continuous carbon fiber reinforced material, a polycarbonate resin prepreg having good adhesion, and a laminate comprising the prepreg can be obtained by using a predetermined amount of polyalkylene glycol, thereby arriving at the present invention. Specifically, the above-described object can be achieved by the present invention below.

< 1 > A polycarbonate resin prepreg, comprising a polycarbonate resin (A) and a continuous carbon fiber reinforced material (B), wherein
the prepreg comprises a polyalkylene glycol (C) in an amount of 1% to 30% by mass with respect to the mass of the polycarbonate resin (A).

< 2 > The prepreg according to the above < 1 >, comprising the continuous carbon fiber reinforced material (B) in an amount of 20% to 80% by volume, and the polycarbonate resin (A) and the polyalkylene glycol (C) in a total amount of 80% to 20% by volume.

< 3 > The prepreg according to the above < 1 > or < 2 >, wherein the glass transition temperature of the polycarbonate

resin (A) is 110°C to 170°C.

< 4 > The prepreg according to any one of the above < 1 > to < 3 >, wherein the viscosity average molecular weight of the polycarbonate resin (A) is 10,000 to 100,000.

< 5 > The prepreg according to any one of the above < 1 > to < 4 >, wherein the polycarbonate resin (A) has a terminal structure derived from a monohydric phenol represented by the following general formula (1):

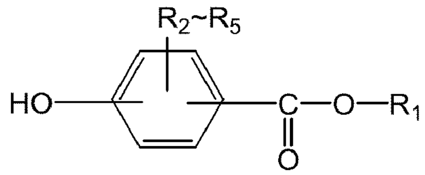

(1)

wherein

$R_1$ represents an alkyl group containing 8 to 36 carbon atoms, or an alkenyl group containing 8 to 36 carbon atoms; and

$R_2$ to $R_5$ each independently represent hydrogen, halogen, an optionally substituted alkyl group containing 1 to 20 carbon atoms, or an optionally substituted aryl group containing 6 to 12 carbon atoms.

< 6 > The prepreg according to any one of the above < 1 > to < 5 >, wherein the polycarbonate resin (A) has a constituent unit derived from a dihydric phenol represented by the following general formula (2):

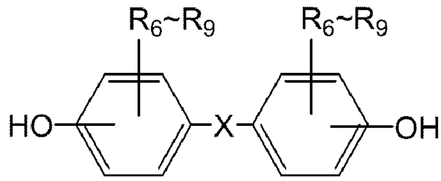

(2)

wherein

$R_6$ to $R_9$ each independently represent hydrogen, halogen, nitro, an optionally substituted alkyl group containing 1 to 20 carbon atoms, an optionally substituted alkoxy group containing 1 to 5 carbon atoms, an optionally substituted aryl group containing 6 to 12 carbon atoms, an optionally substituted aralkyl group containing 7 to 17 carbon atoms, or an optionally substituted alkenyl group containing 2 to 15 carbon atoms;

X represents -O-, -S-, -SO-, $-SO_2-$, -CO-, or a divalent group represented by any one of the following formulae (3) to (6):

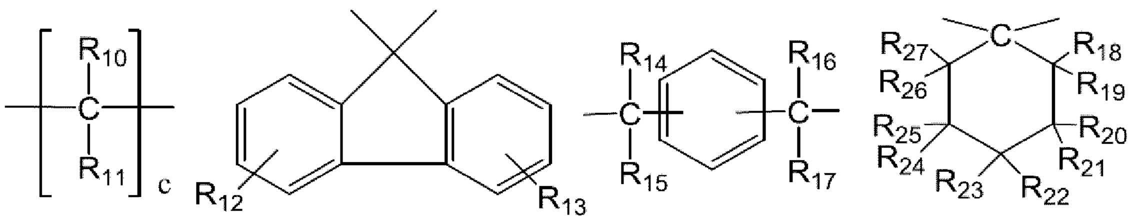

(3) (4) (5) (6)

wherein, in the above formula (3),

$R_{10}$ and $R_{11}$ each independently represent hydrogen, halogen, an optionally substituted alkyl group containing 1 to 20 carbon atoms, an optionally substituted alkoxy group containing 1 to 5 carbon atoms, an optionally substituted aryl group containing 6 to 12 carbon atoms, an optionally substituted aralkyl group containing 7 to 17 carbon atoms, or an optionally substituted alkenyl group containing 2 to 15 carbon atoms, or

$R_{10}$ and $R_{11}$ bind to each other to form a carbocyclic ring containing 3 to 20 carbon atoms or a heterocyclic ring containing 1 to 20 carbon atoms; and

c represents an integer of 0 to 20;

in the above formula (4),

$R_{12}$ and $R_{13}$ each independently represent hydrogen, halogen, an optionally substituted alkyl group containing 1 to 20 carbon atoms, an optionally substituted alkoxy group containing 1 to 5 carbon atoms, an optionally substituted aryl group containing 6 to 12 carbon atoms, an optionally substituted aralkyl group containing 7 to 17

carbon atoms, or an optionally substituted alkenyl group containing 2 to 15 carbon atoms, or
$R_{12}$ and $R_{13}$ bind to each other to form a carbocyclic ring containing 3 to 20 carbon atoms or a heterocyclic ring containing 1 to 20 carbon atoms;
in the above formula (5),
$R_{14}$ to $R_{17}$ each independently represent hydrogen, halogen, an optionally substituted alkyl group containing 1 to 20 carbon atoms, an optionally substituted alkoxy group containing 1 to 5 carbon atoms, an optionally substituted aryl group containing 6 to 12 carbon atoms, an optionally substituted aralkyl group containing 7 to 17 carbon atoms, or an optionally substituted alkenyl group containing 2 to 15 carbon atoms, or
$R_{14}$ and $R_{15}$, and $R_{16}$ and $R_{17}$ bind to each other, respectively, to form a carbocyclic ring containing 3 to 20 carbon atoms or a heterocyclic ring containing 1 to 20 carbon atoms; and
in the above formula (6),
$R_{18}$ to $R_{27}$ each independently represent hydrogen, or an alkyl group containing 1 to 3 carbon atoms, and at least one of $R_{18}$ to $R_{27}$ is an alkyl group containing 1 to 3 carbon atoms.

< 7 > The prepreg according to any one of the above < 1 > to < 6 >, wherein the polyalkylene glycol (C) is a polypropylene glycol.
< 8 > The prepreg according to the above < 7 >, wherein the polypropylene glycol is a polypropylene triol.
< 9 > A laminate, comprising the prepreg according to any one of the above < 1 > to < 8 >.
< 10 > The laminate according to the above < 9 >, comprising:

a laminate consisting of only the prepreg, and
a composite laminate of the prepreg and a polycarbonate sheet.

< 11 > A method for producing a molded body, comprising a step of molding the laminate according to the above < 9 > or < 10 > into a shape, wherein
the molding temperature for the shape molding is 150°C to 185°C.
< 12 > A molded body obtained by molding the laminate according to the above < 9 > or < 10 > into a shape.

Advantageous Effects of Invention

According to the present invention, there can be provided a polycarbonate resin prepreg having good adhesion, and a laminate comprising the prepreg.

Description of Embodiments

Hereinafter, the present invention will be described in detail by exemplifying production examples, examples, and the like, but the present invention is not limited to the exemplified production examples, examples, and the like. The present invention can also be carried out by any method changed within a range that is not greatly deviated from the content of the present invention.
One embodiment of the present invention is a polycarbonate resin prepreg, comprising a polycarbonate resin (A) and a continuous carbon fiber reinforced material (B), wherein the prepreg comprises a polyalkylene glycol (C) in an amount of 1% to 30% by mass with respect to the mass of the polycarbonate resin (A).

< Polycarbonate resin (A) >

The polycarbonate resin (A) used in the present invention is not particularly limited, and may be any type of polycarbonate resin.
In the present invention, it is preferable that the polycarbonate resin (A) has a terminal structure derived from a monohydric phenol represented by the following general formula (1). It is to be noted that, in the description of the present application, examples of the substituent when it is said that the resin may "optionally have a substituent" may include halogen, an alkyl group containing 1 to 20 carbon atoms, and an aryl group containing 6 to 12 carbon atoms.

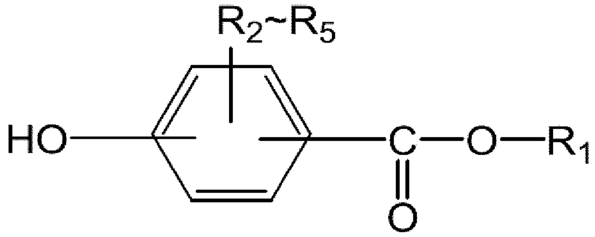

(1)

In the above general formula (1), $R_1$ represents an alkyl group containing 8 to 36 carbon atoms, or an alkenyl group containing 8 to 36 carbon atoms. The upper limit value of the number of carbon atoms of $R_1$ is preferably 35, more preferably 22, and particularly preferably 18. On the other hand, the lower limit value of the number of carbon atoms of $R_1$ is preferably 9, and more preferably 12.

In the general formula (1), $R_2$ to $R_5$ each independently represent hydrogen, halogen, an optionally substituted alkyl group containing 1 to 20 carbon atoms, or an optionally substituted aryl group containing 6 to 12 carbon atoms; $R_2$ to $R_5$ each independently preferably represent hydrogen, halogen, an optionally substituted alkyl group containing 1 to 9 carbon atoms, or an optionally substituted aryl group containing 6 to 8 carbon atoms; and $R_2$ to $R_5$ each independently particularly preferably represent hydrogen.

The monohydric phenol represented by the above general formula (1) may be introduced into the polycarbonate resin of the present invention for being used as an end terminator in a polymerization reaction. Examples of the monohydric phenol represented by the above general formula (1) may include, but are not limited to, cetyl-4-hydroxybenzoate (CEPB), parahydroxybenzoic acid-2-ethylhexyl ester (EHPB), parahydroxybenzoic acid hexadecyl ester, and parahydroxybenzoic acid 2-hexyldecyl ester.

For example, when the monohydric phenol represented by the above general formula (1), which has an alkyl group containing 16 carbon atoms as $R_1$, is used as an end terminator, the glass transition temperature, melt fluidity, moldability, and drawdown resistance of the resulting polycarbonate resin are excellent, and the solubility in solvent of the monohydric phenol upon production of a polycarbonate resin is also excellent, and thus, this monohydric phenol is particularly preferable as an end terminator used in the polycarbonate resin of the present invention.

On the other hand, if the number of carbon atoms of $R_1$ in the general formula (1) becomes too large, the solubility in organic solvents of the monohydric phenol tends to decrease, and productivity may decrease upon production of a polycarbonate resin. As an example, if the number of carbon atoms of $R_1$ is 36 or less, the productivity is high upon the polycarbonate resin production, and the economic efficiency is also favorable. If the number of carbon atoms of $R_1$ is 22 or less, the monohydric phenol is excellent particularly in terms of solubility in organic solvents, and the productivity can be extremely increased upon the polycarbonate resin production, and the economic efficiency can also be improved. On the other hand, if the number of carbon atoms of $R_1$ in the general formula (1) is too small, the glass transition temperature of the polycarbonate resin does not become low enough, and the heat moldability may decrease.

For the required properties of the material, it is permissible to use the main skeleton or the end terminator in combination with one having a different structure, or to mix the present polycarbonate resin with other polycarbonate resins or further, with other transparent resins, without departing from the spirit of the present invention. The structure represented by the above formula (1) accounts for preferably 80 mol % or more of all of the end terminators used, more preferably 90 mol % or more of all of the end terminators used, and particularly preferably all of the end terminators used.

Examples of other end terminators that may be used in combination with the present end terminator may include: alkyl phenols, such as phenol, p-cresol, o-cresol, 2,4-xylenol, p-t-butylphenol, o-allylphenol, p-allylphenol, p-hydroxystyrene, p-hydroxy-$\alpha$-methylstyrene, p-propylphenol, p-cumylphenol, p-phenylphenol, o-phenylphenol, p-trifluoromethylphenol, p-nonylphenol, p-dodecylphenol, eugenol, amylphenol, hexylphenol, heptylphenol, octylphenol, nonylphenol, decylphenol, dodecylphenol, myristylphenol, palmitylphenol, stearylphenol, and behenylphenol; and hydoxybenzoic acid alkyl esters, such as the methyl ester, ethyl ester, propyl ester, butyl ester, amyl ester, hexyl ester, and heptyl ester of parahydroxybenzoic acid. Moreover, it is also possible to use the above-described monohydric phenols by the combined use of two or more types.

In a preferred aspect of the present invention, the polycarbonate resin used in the present invention preferably has a constituent unit derived from a dihydric phenol represented by the following general formula (2):

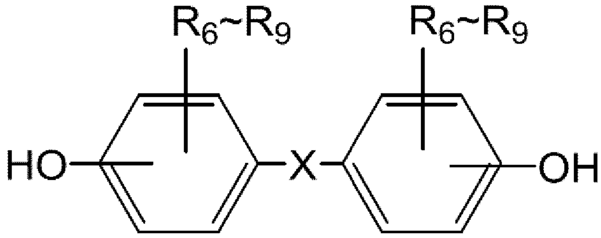

(2)

In the above general formula (2), $R_6$ to $R_9$ each independently represent hydrogen, halogen, nitro, an optionally substituted alkyl group containing 1 to 20 carbon atoms, an optionally substituted alkoxy group containing 1 to 5 carbon atoms, an optionally substituted aryl group containing 6 to 12 carbon atoms, an optionally substituted aralkyl group containing 7 to 17 carbon atoms, or an optionally substituted alkenyl group containing 2 to 15 carbon atoms; and $R_6$ to $R_9$ each independently preferably represent hydrogen or a methyl group.

In the above general formula (2), X represents -O-, -S-, -SO-, $-SO_2-$, -CO-, or a divalent group represented by any one of the following formulae (3) to (6).

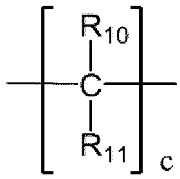 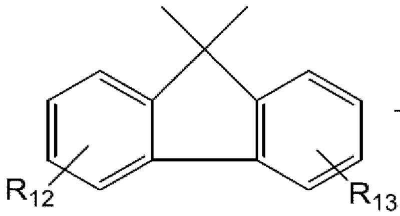 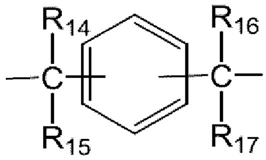 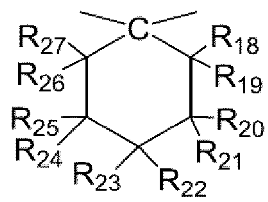

(3) (4) (5) (6)

In the above formula (3), $R_{10}$ and $R_{11}$ each independently represent hydrogen, halogen, an optionally substituted alkyl group containing 1 to 20 carbon atoms, an optionally substituted alkoxy group containing 1 to 5 carbon atoms, an optionally substituted aryl group containing 6 to 12 carbon atoms, an optionally substituted aralkyl group containing 7 to 17 carbon atoms, or an optionally substituted alkenyl group containing 2 to 15 carbon atoms; or $R_{10}$ and $R_{11}$ bind to each other to form a carbocyclic ring containing 3 to 20 carbon atoms or a heterocyclic ring containing 1 to 20 carbon atoms.

From the viewpoint of easy availability of raw materials, $R_{10}$ preferably represents an alkyl group containing 1 to 3 carbon atoms, or an aryl group containing 6 to 12 carbon atoms.

From the viewpoint of easy availability of raw materials, $R_{11}$ preferably represents an alkyl group containing 1 to 3 carbon atoms, or an aryl group containing 6 to 12 carbon atoms.

In addition, from the viewpoint of easy availability of raw materials, preferably, $R_{10}$ and $R_{11}$ bind to each other to form a carbocyclic ring containing 6 to 12 carbon atoms.

Moreover, c represents an integer of 0 to 20, and from the viewpoint of easy availability of raw materials, c preferably represents 1 or 2.

In the above formula (4), $R_{12}$ and $R_{13}$ each independently represent hydrogen, halogen, an optionally substituted alkyl group containing 1 to 20 carbon atoms, an optionally substituted alkoxy group containing 1 to 5 carbon atoms, an optionally substituted aryl group containing 6 to 12 carbon atoms, an optionally substituted aralkyl group containing 7 to 17 carbon atoms, or an optionally substituted alkenyl group containing 2 to 15 carbon atoms; or

$R_{12}$ and $R_{13}$ bind to each other to form a carbocyclic ring containing 3 to 20 carbon atoms or a heterocyclic ring containing 1 to 20 carbon atoms

From the viewpoint of easy availability of raw materials, $R_{12}$ preferably represents hydrogen or a methyl group.

From the viewpoint of easy availability of raw materials, $R_{13}$ preferably represents hydrogen or a methyl group.

In addition, from the viewpoint of easy availability of raw materials, preferably, $R_{12}$ and $R_{13}$ bind to each other to form a carbocyclic ring containing 5 to 12 carbon atoms.

In the above formula (5), $R_{14}$ to $R_{17}$ each independently represent hydrogen, halogen, an optionally substituted alkyl group containing 1 to 20, preferably 1 to 9 carbon atoms, an optionally substituted alkoxy group containing 1 to 5, preferably 1 to 3 carbon atoms, an optionally substituted aryl group containing 6 to 12, preferably 6 to 8 carbon atoms, an optionally substituted aralkyl group containing 7 to 17, preferably 7 to 12 carbon atoms, or an optionally substituted alkenyl group containing 2 to 15, preferably 2 to 5 carbon atoms. $R_{14}$ and $R_{15}$, and $R_{16}$ and $R_{17}$ may optionally bind to each other, respectively, to form a carbocyclic ring containing 3 to 20 carbon atoms or a heterocyclic ring containing 1 to 20 carbon atoms.

In the above formula (6), $R_{18}$ to $R_{27}$ each independently represent hydrogen, or an alkyl group containing 1 to 3

carbon atoms, and at least one of $R_{18}$ to $R_{27}$ is an alkyl group containing 1 to 3 carbon atoms.

From the viewpoint of easy availability of raw materials, preferably, $R_{18}$ to $R_{27}$ each independently represent hydrogen or a methyl group.

From the viewpoint of the moldability of the resulting prepreg, the polycarbonate resin of the present invention comprises the constituent unit derived from the dihydric phenol represented by the above general formula (2) in an amount of preferably 20% to 100% by mass, more preferably 40% to 100% by mass, and particularly preferably 60% to 100% by mass. When the above-described polycarbonate resin is a copolymer, it may comprise constituent units other than the constituent unit derived from the dihydric phenol represented by the above general formula (2), within a range that does not impair the effects of the present invention.

From the viewpoint of easy availability of raw materials and raw material purity,
Examples of the dihydric phenol represented by the above general formula (2) that is preferably used in the polycarbonate resin of the present invention may include, for example, 2,2-bis(4-hydroxyphenyl)propane [= bisphenol A], bis(4-hydroxyphenyl)-p-diisopropylbenzene, 4,4'-dihydroxydiphenyl, 2,2-bis(4-hydroxy-3,5-dimethylphenyl)propane, 2,2-bis(4-hydroxy-3-methylphenyl)propane, 2,2-bis(4-hydroxy-3,5-diethylphenyl)propane, 2,2-bis(4-hydroxy-3-ethylphenyl)propane, 2,2-bis(4-hydroxy-3,5-diphenylphenyl)propane, 2,2-bis(4-hydroxy-3-phenylphenyl)propane, 2,2-bis(4-hydroxy-3,5-dibromophenyl)propane, 2,2-bis(4-hydroxy-3-bromophenyl)propane, 2,2-bis(4-hydroxyphenyl)pentane, 2,4'-dihydroxydiphenylmethane, bis-(4-hydroxy-3-methylphenyl)methane, bis-(4-hydroxy-3-nitrophenyl)methane, 1,1-bis(4-hydroxyphenyl)ethane, 1,1-bis(4-hydroxy-3-methylphenyl)ethane, 3,3-bis(4-hydroxyphenyl)pentane, 1,1-bis(4-hydroxyphenyl)cyclohexane [= bisphenol Z], bis(4-hydroxyphenyl)sulfone, 2,4'-dihydroxydiphenyl sulfone, bis(4-hydroxyphenyl)sulfide, 4,4'-dihydroxydiphenyl ether, 4,4'-dihydroxy-3,3'-dimethyldiphenyl ether, 4,4'-dihydroxy-2,5-diethoxydiphenyl ether, 1-phenyl-1,1-bis(4-hydroxyphenyl)ethane, 1,1-bis(4-hydroxy-3-methylphenyl)cyclohexane, 1-phenyl-1,1-bis(4-hydroxy-3-methylphenyl)ethane, bis(4-hydroxyphenyl)diphenylmethane, bis(4-hydroxy-3-methylphenyl)diphenylmethane, 9,9-bis(4-hydroxyphenyl)fluorene, 9,9-bis(4-hydroxy-3-methylphenyl)fluorene, and 2,2-bis(4-hydroxyphenyl) hexafluoropropane. The dihydric phenol represented by the above general formula (2) is preferably bis(4-hydroxyphenyl) alkane, and is particularly preferably 2,2-bis(4-hydroxyphenyl)propane [bisphenol A]. These aromatic dihydroxy compounds can be used alone or by mixing two or more types.

The polycarbonate resin used in the present invention has a viscosity average molecular weight of preferably 10,000 to 100,000, more preferably 14,000 to 60,000, and further preferably 16,000 to 40,000, from the viewpoint of a solution viscosity that is easily handled as a resin solution.

The polycarbonate resin used in the present invention has a glass transition temperature of preferably 110°C to 170°C, more preferably 110°C to 150°C, further preferably 110°C to 140°C, and particularly preferably 110°C to 130°C, from the viewpoint of improving shape moldability.

< Continuous carbon fiber reinforced material (B) >

The continuous carbon fiber reinforced material (B) used in the present invention is composed of continuous fibers. The fiber length of the continuous fibers is, on average, preferably 10 mm or more, and more preferably 30 mm or more. In addition, the form of the continuous fibers may be a unidirectional sheet, a woven sheet, a multiaxial laminate sheet, etc.

The number of short fibers contained in a fiber bundle (filament), the number of filaments contained in a filament bundle (tow), and the configuration thereof vary depending on the carbon fibers. In the present invention, however, the number of short fibers, the number of filaments, and the configuration thereof are not limited, and a wide variety of carbon fibers can be used.

The percentage of the continuous carbon fiber reinforced material (B) in the polycarbonate resin prepreg of the present invention is preferably 20% to 80% by volume, and from the viewpoint of the mechanical properties of the prepreg, it is more preferably 40% to 80% by volume, and further preferably 50% to 70% by volume,.

< Polyalkylene glycol (C) >

The polyalkylene glycol (C) used in the present invention is not particularly limited, and may be any type of polyalkylene glycol.

The polycarbonate resin prepreg of the present invention is characterized in that it comprises the polyalkylene glycol (C) in an amount of 1% to 30% by mass with respect to the mass of the polycarbonate resin (A). Preferably, The polycarbonate resin prepreg comprises the polyalkylene glycol (C) in an amount of preferably 2% to 20% by mass, more preferably 3% to 15% by mass, with respect to the mass of the polycarbonate resin (A).

If the content of the polyalkylene glycol (C) is less than 1% by mass, the adhesion of the laminate decreases, and precise shape molding becomes difficult. If it exceeds 30% by mass, the mechanical strength of the prepreg or the laminate decreases, and plastic deformation easily occurs.

The polyalkylene glycol (C) used in the present invention is preferably a bifunctional to tetrafunctional polyalkylene glycol as shown below, and from the viewpoint of the ease of shape molding and excellent adhesion, the present polyalkylene glycol (C) is more preferably a trifunctional polyalkylene glycol. The following n1 to n4 each independently represent preferably an integer of 1 to 100, more preferably an integer of 1 to 50, and particularly preferably an integer of 1 to 30. R shown below is preferably a propylene group, a butylene group, an ethylene group, a methylene group, etc., and is more preferably a propylene group.

Polyalkylene glycols

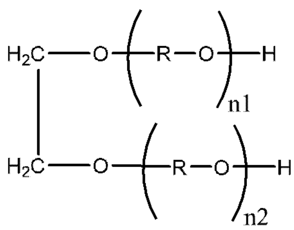
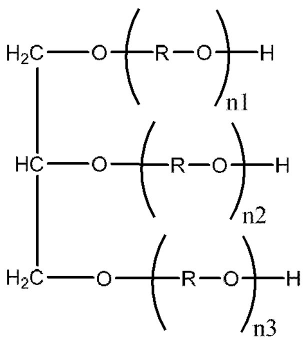
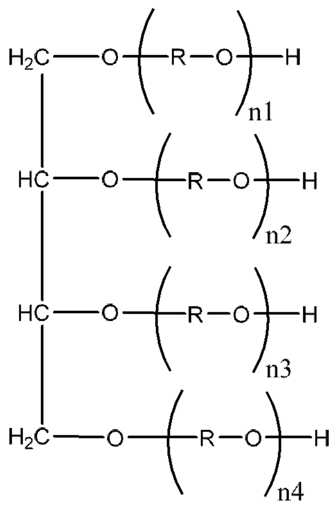

In the present invention, among the above-described polyalkylene glycols, the polyalkylene glycol (C) is preferably a bifunctional to tetrafunctional polypropylene glycol as shown below.

Polypropylene glycols

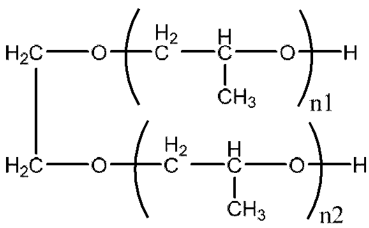
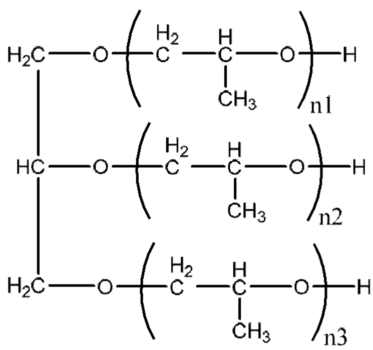
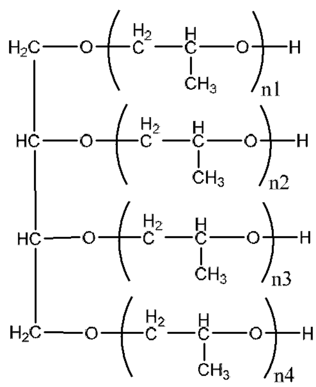

In the present invention, among the above-described polypropylene glycols, the polyalkylene glycol (C) is preferably a trifunctional polypropylene triol, as shown below.

Polypropylene triol

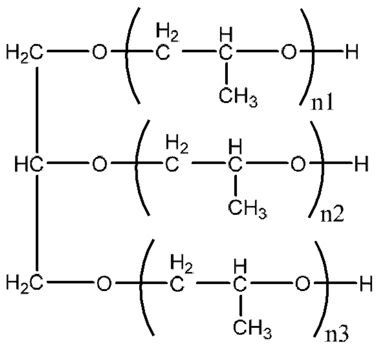

In the polyalkylene glycol (C) used in the present invention, OH groups are preferably 20 to 700 mg-KOH/g, and more preferably 30 to 500mg-KOH/g.
The polyalkylene glycol (C) used in the present invention has a number average molecular weight (Mn) of preferably 200 to 5000, and more preferably 500 to 4000.

< Polycarbonate resin prepreg >

With respect to the percentage between the continuous carbon fiber reinforced material (B) and a total of the polycarbonate resin (A) and the polyalkylene glycol (C) in the polycarbonate resin prepreg of the present invention, it is preferable that the continuous carbon fiber reinforced material (B) is 20% to 80% by volume, and that the total of the polycarbonate resin (A) and the polyalkylene glycol (C) is 80% to 20% by volume. From the viewpoint of the mechanical strength of the prepreg, it is more preferable that the continuous carbon fiber reinforced material (B) is 40% to 80% by volume, and that the total of the polycarbonate resin (A) and the polyalkylene glycol (C) is 60% to 20% by volume; and it is further preferable that the continuous carbon fiber reinforced material (B) is 50% to 70% by volume by volume, and that the total of the polycarbonate resin (A) and the polyalkylene glycol (C) is 50% to 30% by volume.
If the percentage of the continuous carbon fiber reinforced material (B) is smaller than this range, the mechanical properties of the prepreg will be equal to or less than those of light metals. On the other hand, if the percentage of the continuous carbon fiber reinforced material (B) is larger than this range, the amount of resin is so small that the carbon fiber-bundling action of the matrix resin does not function, and the mechanical strength may decrease.
The polycarbonate resin prepreg of the present invention may comprise components other than the polycarbonate resin (A), the continuous carbon fiber reinforced material (B), and the polyalkylene glycol (C), within a range that does not impair the effects of the present invention. Examples of these components may include other resins, and various additives such as a release agent, a flame retardant, an antioxidant, a heat stabilizer, a flame retardant aid, an ultraviolet absorber, a coloring agent, an antistatic agent, a fluorescent brightener, an antifogging agent, a fluidity improver, a plasticizer, a dispersant, and an antibacterial agent.
Examples of the above-described other resins may include: thermoplastic polyester resins such as a polyarylate resin, a polyethylene terephthalate resin (PET resin), a polytrimethylene terephthalate (PTT resin), and a polybutylene terephthalate resin (PBT resin); styrene-based resins such as a polystyrene resin (PS resin), a high impact polystyrene resin (HIPS), an acrylonitrile-styrene copolymer (AS resin), and a methyl methacrylate-styrene copolymer (MS resin); core/shell type elastomers such as methyl methacrylate-acrylic rubber-styrene copolymer (MAS) and polyester-based elastomers; polyolefin resins such as a cyclic cycloolefin resin (COP resin) and a cyclic cycloolefin (COP) copolymer resin; a polyamide resin (PA resin); a polyimide resin (PI resin); a polyetherimide resin (PEI resin); a polyurethane resin (PU resin); a polyphenylene ether resin (PPE resin); a polyphenylene sulfide resin (PPS resin); a polysulfone resin (PSU resin); a polymethacrylate resin (PMMA resin); and polycaprolactone.
The thickness of the polycarbonate resin prepreg of the present invention is not particularly limited, and it is preferably 0.01 mm to 1 mm, and more preferably 0.05 mm to 0.5 mm.
The method of producing a laminate by stacking the polycarbonate resin **prepregs** of the present invention includes a press molding method, etc.
A preferred embodiment of the present invention is a laminate including a laminate consisting of only the above-described prepreg, and a composite laminate of the above-described prepreg and a polycarbonate sheet.

< Method for producing polycarbonate resin prepreg >

The method for producing the polycarbonate resin prepreg of the present invention preferably comprises: a step of producing a resin solution in which the polycarbonate resin (A) is dissolved in dichloromethane according to an interfacial polymerization method; a step of adding the polyalkylene glycol (C) to the resin solution to produce a glycol-containing resin solution; and impregnating the continuous carbon fiber reinforced material (B) with the glycol-containing resin solution.

In a preferred embodiment of the present invention, after completion of the impregnation, the method comprises a step of drying the continuous carbon fiber reinforced material (B) for about 5 to 15 minutes in a constant temperature room at 25°C and then drying it for about 0.5 to 4 hours in a hot air dryer at 100°C to 150°C.

In the production method of the present invention, the concentration of the polycarbonate resin in the above-described resin solution is preferably 10% to 30% by mass, and more preferably 12% to 25% by mass. If the concentration of the polycarbonate resin is lower than 10% by mass, foaming may occur during the drying in the subsequent step. On the other hand, the concentration of the polycarbonate resin it is higher than 30% by mass, the solution viscosity becomes significantly high, and it becomes difficult to handle the resin solution during the impregnation step.

(Step of producing resin solution)

In the reaction according to the interfacial polymerization method, reaction materials including dihydric phenol, monohydric phenol used as an end terminator, an antioxidant used to prevent oxidation of the dihydric phenol, as necessary, and phosgene or triphosgene used as a carbonate binder, are mixed with one another in the presence of dichloromethane and an aqueous alkaline solution, usually with the pH kept at 10 or higher. Thereafter, a polymerization catalyst such as a tertiary amine or a quaternary ammonium salt is added to the reaction mixture to carry out interfacial polymerization, and the resulting resin solution is purified to obtain a polycarbonate resin solution. Addition of the end terminator is not particularly limited, as long as it is added between the time of phosgenation and initiation of the polymerization reaction. The reaction temperature is 0°C to 35°C, and the reaction time is several minutes to several hours.

(Step of producing glycol-containing resin solution)

**The step** of producing a glycol-containing resin solution is a step of adding the polyalkylene glycol (C) to the resin solution as obtained above to produce a glycol-containing resin solution. The method of mixing the polyalkylene glycol (C) into the resin solution is not particularly limited, and any mixing method may be used.

**In** the present invention, the polyalkylene glycol (C) is mixed into the resin solution, so that the resin solution comprises the polyalkylene glycol (C) in an amount of 1% to 30% by mass with respect to the mass of polycarbonate resin (A). The polyalkylene glycol (C) is mixed into the resin solution, so that the resin solution comprises the polyalkylene glycol (C) in an amount of preferably 2% to 20% by mass with respect to the mass of polycarbonate resin (A). The polyalkylene glycol (C) is mixed into the resin solution, so that the resin solution comprises the polyalkylene glycol (C) in an amount of more preferably 3% to 15% by mass with respect to the mass of polycarbonate resin (A).

(Impregnation step)

The impregnation step is a step of impregnating the continuous carbon fiber reinforced material (B) with the glycol-containing resin solution of the present invention. The impregnation method is not particularly limited, and various methods can be applied, such as a method of immersing the fibers in a tank containing the solution, a method of passing the fibers through a tank sprayed with the solution, and a method of spraying the solution onto the fibers. Among these, the method of immersing the fibers in a tank containing the solution is preferable because this method enables the simplest and most uniform application of the solution to the fibers.

(Drying step)

The drying step is a step of drying the continuous carbon fiber reinforced material impregnated with the glycol-containing resin solution. For example, it is preferable that drying without or with little external heating, such as air drying, is carried out, and then, drying with external heating is carried out. Air drying may be performed by simply leaving the material at room temperature, or drying may be accelerated by blowing air.

< Method for producing a molded body >

The method for producing a molded body of the present invention comprises a step of molding a laminate containing the above-described polycarbonate resin prepreg into a shape. Herein, the shape molding is a method which comprises heating a laminate containing a polycarbonate resin prepreg to a temperature higher than the glass transition point of the polycarbonate resin using a heater or the like, then pressing the laminate using a die such as a mold, and then cooling the resulting laminate to the glass transition point of the polycarbonate resin or lower, so as to perform molding. This

is a method of molding a product by deformation.

The molding temperature for the above-described shape molding is preferably 150°C to 185°C, and more preferably 160°C to 180°C.

## Examples

Hereinafter, the present invention will be specifically described in the following examples and comparative example. It is to be noted that the embodiments may be modified, as appropriate, as long as the effects of the invention are achieved.

< Viscosity average molecular weight (Mv) >

Measurement equipment: Ubbelohde capillary viscometer
Solvent: Dichloromethane
Concentration of resin solution: 0.5 grams/dl
Measurement temperature: 25°C

The measurement was carried out under the above-described conditions, the limiting viscosity [η] dl/g was calculated with the Huggins constant of 0.45, and the viscosity average molecular weight (Mv) was then calculated using the following equation.

$$\eta = 1.23 \times 10^{-4} \times Mv^{0.83}$$

< Carbon fiber content percentage (Vf) >

The carbon fiber content percentage was measured based on JIS K 7075.

< Glass transition temperature (Tg) >

The glass transition temperature was measured using a differential scanning calorimeter (DSC).

Measuring equipment: Differential scanning calorimeter (DSC) (DSC-50, manufactured by Shimadzu Corporation)
Heating rate: 10°C/min
Gas flow environment: Nitrogen 20 ml/min
Sample pretreatment: Heat melting at 300°C

< Peel test (adhesion test) >

After removing the film sandwiched between the laminates, both ends of the laminate were held by hand and the adhesive surface of the laminates was peeled off. The weight felt when the laminates were peeled and the gloss of the peeled surface were checked.

Good adhesion was marked as "○" when heaviness was felt heavy upon peeling and the peeled surface was not glossy by visual observation. Meanwhile, poor adhesion was marked as " x " when the heaviness was not feet upon peeling and the peeled surface was glossy by visual observation.

(Synthetic example of polycarbonate resin)

Into 650 ml of 9-mass-% sodium hydroxide aqueous solution, 100 g (0.44 mol) of bisphenol A (BPA) manufactured by NIPPON STEEL Chemical & Material Co., Ltd. and 0.3 g of hydrosulfite used as an antioxidant were added and dissolved. To the obtained solution, 385 ml of dichloromethane was added, and while stirring, 60.0 g of phosgene was blown into the solution over 40 minutes while the solution temperature was kept in the range of 15°C to 25°C.

After completion of the phosgene blowing, 100 ml of 9-mass-% sodium hydroxide aqueous solution, and a solution of 9.92 g (0.027 mol) of cetyl-4-hydroxybenzoate (CEPB) manufactured by Ueno Fine Chemicals Industry, Ltd. dissolved in 315 ml of dichloromethane, were added to the resulting solution, and the obtained mixture was then emulsified by vigorous stirring. Thereafter, 0.5 ml of triethylamine was added as a polymerization catalyst to the reaction mixture, and

polymerization was then carried out for about 40 minutes. The polymerization solution was separated into an aqueous phase and an organic phase, and the organic phase was then neutralized with phosphoric acid, followed by washing with pure water repeatedly until the pH of the wash liquid became neutral. The concentration of the thus purified polycarbonate resin solution was 14% by mass.

The viscosity average molecular weight of the resulting polycarbonate resin solution was measured, and the viscosity average molecular weight was 18,000. The resulting polycarbonate resin solution was dried to remove the solvent, and the Tg of the resulting polycarbonate resin was 116°C.

(Example 1)

Into 2.6 kg of the polycarbonate resin solution obtained in the above synthetic example, 18.2 g of polypropylene glycol represented by the following structural formula (SANNIX GP-3000 manufactured by Sanyo Chemical Industries, Ltd.; OH groups: 56 mg-KOH/g; number average molecular weight (Mn): approximately 3000) was mixed. Specifically, a glycol-containing resin solution containing 364 g of polycarbonate resin and 18.2 g of polypropylene glycol (in an amount of 5% by mass with respect to the mass of the polycarbonate resin) was produced.

A continuous carbon fiber reinforced material (TORAYCA CLOTH CO6347B manufactured by Toray Industries, Inc.) was cut into a size of 10 cm x 10 cm. The continuous carbon fiber reinforced material was impregnated with the glycol-containing resin solution in an impregnation tank. After completion of the impregnation, the material was dried in a constant temperature room at 25°C for 10 minutes, and was then dried in a hot air dryer at 120°C for 2 hours, to obtain a polycarbonate resin prepreg (a carbon fiber reinforced polycarbonate prepreg, CFRTP) was obtained.

Two sheets of the obtained prepreg (15 cm x 20 cm) were stacked, and were pressed in a heat pressing machine at 175°C at 0.5 MPa for 15 minutes and then, at 175°C at 2 MPa for 5 minutes. After cooling, a laminate was obtained.

The physical properties of the obtained prepreg and laminate are shown in Table 1.

GP-3000 trifunctional polyol

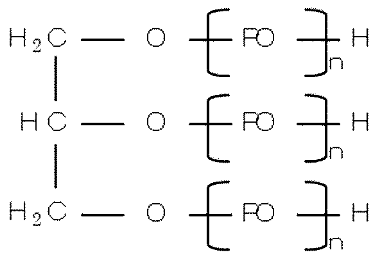

(Example 2)

A prepreg and a laminate were obtained in the same manner as that of Example 1, with the exception that a glycol-containing resin solution containing 364 g of polycarbonate resin and 36.4 g of polypropylene glycol (in an amount of 10% by mass with respect to the mass of the polycarbonate resin) was used. The physical properties of the obtained prepreg and laminate are shown in Table 1.

(Comparative Example 1)

A prepreg and a laminate were obtained in the same manner as that of Example 1, with the exception that polypropylene glycol was not used. The physical properties of the obtained prepreg and laminate are shown in Table 1.

[Table 1]

| | Example 1 | Example 2 | Comp. Ex. 1 |
|---|---|---|---|
| Additive amount of polypropylene glycol (% by mass to polycarbonate resin) | 5 | 10 | 0 |
| Carbon fiber content percentage (% by volume) Resin content percentage (% by volume) | 48.7 51.3 | 52.5 47.5 | 47.0 53.0 |
| Tg (°C) of polycarbonate resin | 116 | 116 | 116 |

(continued)

| | Example 1 | Example 2 | Comp. Ex. 1 |
|---|---|---|---|
| Peel test | ○ | ○ | × |

## Claims

1. A polycarbonate resin prepreg, comprising a polycarbonate resin (A) and a continuous carbon fiber reinforced material (B), wherein
the prepreg comprises a polyalkylene glycol (C) in an amount of 1% to 30% by mass with respect to the mass of the polycarbonate resin (A).

2. The prepreg according to claim 1, comprising the continuous carbon fiber reinforced material (B) in an amount of 20% to 80% by volume, and the polycarbonate resin (A) and the polyalkylene glycol (C) in a total amount of 80% to 20% by volume.

3. The prepreg according to claim 1 or 2, wherein a glass transition temperature of the polycarbonate resin (A) is 110°C to 170°C.

4. The prepreg according to any one of claims 1 to 3, wherein a viscosity average molecular weight of the polycarbonate resin (A) is 10,000 to 100,000.

5. The prepreg according to any one of claims 1 to 4, wherein the polycarbonate resin (A) has a terminal structure derived from a monohydric phenol represented by the following general formula (1):

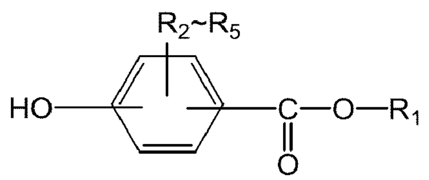

(1)

wherein
$R_1$ represents an alkyl group containing 8 to 36 carbon atoms, or an alkenyl group containing 8 to 36 carbon atoms; and $R_2$ to $R_5$ each independently represent hydrogen, halogen, an optionally substituted alkyl group containing 1 to 20 carbon atoms, or an optionally substituted aryl group containing 6 to 12 carbon atoms.

6. The prepreg according to any one of claims 1 to 5, wherein the polycarbonate resin (A) has a constituent unit derived from a dihydric phenol represented by the following general formula (2):

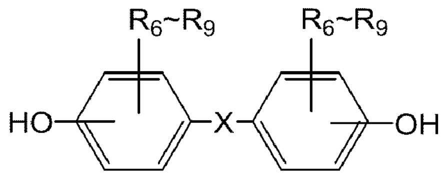

(2)

wherein

$R_6$ to $R_9$ each independently represent hydrogen, halogen, nitro, an optionally substituted alkyl group containing 1 to 20 carbon atoms, an optionally substituted alkoxy group containing 1 to 5 carbon atoms, an optionally substituted aryl group containing 6 to 12 carbon atoms, an optionally substituted aralkyl group containing 7 to 17 carbon atoms, or an optionally substituted alkenyl group containing 2 to 15 carbon atoms;
X represents -O-, -S-, -SO-, $-SO_2-$, -CO-, or a divalent group represented by any one of the following formulae (3) to (6):

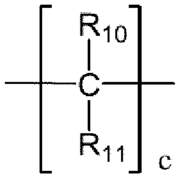 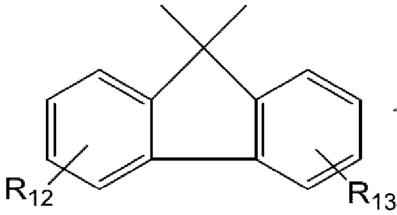 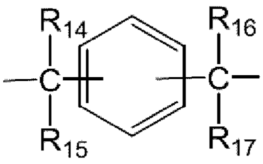 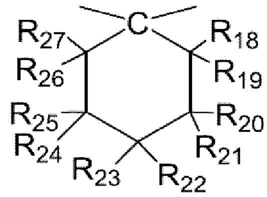

(3) (4) (5) (6)

wherein, in the above formula (3),
$R_{10}$ and $R_{11}$ each independently represent hydrogen, halogen, an optionally substituted alkyl group containing 1 to 20 carbon atoms, an optionally substituted alkoxy group containing 1 to 5 carbon atoms, an optionally substituted aryl group containing 6 to 12 carbon atoms, an optionally substituted aralkyl group containing 7 to 17 carbon atoms, or an optionally substituted alkenyl group containing 2 to 15 carbon atoms, or
$R_{10}$ and $R_{11}$ bind to each other to form a carbocyclic ring containing 3 to 20 carbon atoms or a heterocyclic ring containing 1 to 20 carbon atoms; and
c represents an integer of 0 to 20;
in the above formula (4),
$R_{12}$ and $R_{13}$ each independently represent hydrogen, halogen, an optionally substituted alkyl group containing 1 to 20 carbon atoms, an optionally substituted alkoxy group containing 1 to 5 carbon atoms, an optionally substituted aryl group containing 6 to 12 carbon atoms, an optionally substituted aralkyl group containing 7 to 17 carbon atoms, or an optionally substituted alkenyl group containing 2 to 15 carbon atoms, or
$R_{12}$ and $R_{13}$ bind to each other to form a carbocyclic ring containing 3 to 20 carbon atoms or a heterocyclic ring containing 1 to 20 carbon atoms;
in the above formula (5),
$R_{14}$ to $R_{17}$ each independently represent hydrogen, halogen, an optionally substituted alkyl group containing 1 to 20 carbon atoms, an optionally substituted alkoxy group containing 1 to 5 carbon atoms, an optionally substituted aryl group containing 6 to 12 carbon atoms, an optionally substituted aralkyl group containing 7 to 17 carbon atoms, or an optionally substituted alkenyl group containing 2 to 15 carbon atoms, or
$R_{14}$ and $R_{15}$, and $R_{16}$ and $R_{17}$ bind to each other, respectively, to form a carbocyclic ring containing 3 to 20 carbon atoms or a heterocyclic ring containing 1 to 20 carbon atoms; and
in the above formula (6),
$R_{18}$ to $R_{27}$ each independently represent hydrogen, or an alkyl group containing 1 to 3 carbon atoms, and at least one of $R_{18}$ to $R_{27}$ is an alkyl group containing 1 to 3 carbon atoms.

7. The prepreg according to any one of claims 1 to 6, wherein the polyalkylene glycol (C) is a polypropylene glycol.

8. The prepreg according to claim 7, wherein the polypropylene glycol is a polypropylene triol.

9. A laminate, comprising the prepreg according to any one of claims 1 to 8.

10. The laminate according to claim 9, comprising:

a laminate consisting of only the prepreg, and
a composite laminate of the prepreg and a polycarbonate sheet.

11. A method for producing a molded body, comprising molding the laminate according to claim 9 or 10 into a shape, wherein
a molding temperature for the shape molding is 150°C to 185°C.

12. A molded body obtained by molding the laminate according to claim 9 or 10 into a shape.

## INTERNATIONAL SEARCH REPORT

International application No. **PCT/JP2023/041582**

### A. CLASSIFICATION OF SUBJECT MATTER

***C08J 5/04***(2006.01)i; ***B32B 27/04***(2006.01)i; ***C08G 64/04***(2006.01)i; ***C08K 7/06***(2006.01)i; ***C08L 69/00***(2006.01)i; ***C08L 71/02***(2006.01)i
FI: C08J5/04 CFD; B32B27/04; C08G64/04; C08K7/06; C08L69/00; C08L71/02

According to International Patent Classification (IPC) or to both national classification and IPC

### B. FIELDS SEARCHED

Minimum documentation searched (classification system followed by classification symbols)

C08J5/04; B32B27/04; C08G64/04; C08K7/06; C08L69/00; C08L71/02

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2019/146633 A1 (TORAY INDUSTRIES, INC.) 01 August 2019 (2019-08-01) claims, examples, entire text | 1-12 |
| A | WO 2018/216516 A1 (MITSUBISHI GAS CHEMICAL COMPANY, INC.) 29 November 2018 (2018-11-29) claims, examples, entire text | 1-12 |
| A | JP 2016-172834 A (MITSUBISHI RAYON CO., LTD.) 29 September 2016 (2016-09-29) claims, examples, entire text | 1-12 |
| A | JP 01-501233 A (BASF AKTIENGESELLSCHAFT) 27 April 1989 (1989-04-27) claims, examples, entire text | 1-12 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **01 February 2024** | **13 February 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2023/041582**

| Patent document cited in search report | Publication date (day/month/year) | Patent family member(s) | Publication date (day/month/year) |
|---|---|---|---|
| WO 2019/146633 A1 | 01 August 2019 | US 2020/0347193 A1<br>claims, examples, entire text<br>EP 3744767 A1<br>CN 111615530 A<br>TW 201936781 A | |
| WO 2018/216516 A1 | 29 November 2018 | US 2020/0140635 A1<br>claims, examples, entire text<br>EP 3632984 A1<br>CN 110651008 A<br>KR 10-2020-0010184 A<br>TW 201906904 A | |
| JP 2016-172834 A | 29 September 2016 | (Family: none) | |
| JP 01-501233 A | 27 April 1989 | US 4894105 A<br>claims, examples, entire text<br>JP 1-316222 A<br>US 4919739 A<br>US 5128198 A<br>US 4943472 A<br>WO 1988/003468 A2<br>EP 0289591 A1<br>EP 0330980 A2<br>DE 3775552 A<br>CA 1319053 A<br>KR 10-1989-0700067 A<br>CA 1330410 A<br>KR 10-1989-0014637 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2018216516 A